# NEUE EUROPÄISCHE PATENTSCHRIFT

(11) **EP 0 498 417 B2**
(45) Veröffentlichungstag und Bekanntmachung des Hinweises auf die Entscheidung über den Einspruch: **09.12.1998**
(45) Hinweis auf die Patenterteilung: 03.01.1996
(21) Anmeldenummer: 92101978.2
(22) Anmeldetag: 06.02.1992
(51) Int. Cl.: B29C 33/62, C08F 8/14

(54) **Ester von einem oxidierten Polyethylenwachs und seine Verwendung als Gleitmittel in Kunststoff-Formmassen**
Ester of polyoxymethylene wax and its use as separating agent on plastics manufacture
Ester d'une cire de polyoxyméthylène et son utilisation comme agent de démoulage en façonnage de plastiques

(30) Priorität: 07.02.1991 DE 4103611
(43) Veröffentlichungstag der Anmeldung: 12.08.1992
(73) Patentinhaber: HOECHST AKTIENGESELLSCHAFT, 65926 Frankfurt am Main (DE)
(72) Erfinder: Hohner, Gerd, Dr., W-8906 Gersthofen (DE); Lukasch, Anton, W-8901 Meitingen (DE); Piesold, Jan-Peter, Dr., W-8900 Augsburg (DE)

(56) Entgegenhaltungen:
- EP-A- 170 014
- EP-A- 0 172 339
- PATENT ABSTRACTS OF JAPAN vol. 10, no. 377 (C-392)(2434) 16. Dezember 1986
- KUNSTSTOFFE Bd. 75, Nr. 1, Januar 1985, MUNCHEN DE Seiten 35 - 38 DR. H. KUHNE UND DR. H. BECK 'NEUE POLYMERE GLEITMITTEL FUER THERMOPLASTE'

## Beschreibung

Die Erfindung bezieht sich auf einen Ester von einem oxidierten Polyethylenwachs, der als Gleitmittel für die thermoplastische Verarbeitung von Kunststoffen, insbesondere auf der Basis von Vinylpolymeren, dient.

Thermoplastische Kunststoffe werden in der Regel oberhalb ihres Schmelzpunktes verarbeitet. Die Art der Verarbeitung richtet sich hierbei nach den Eigenschaften des verwendeten Kunststoffs sowie nach der Form des angestrebten Endprodukts. Ganz überwiegend angewendete Verarbeitungsverfahren sind das Spritzgießen, bei welchem die Schmelze in eine Form eingespritzt und der geformte Artikel nach dem Abkühlen unter Schmelzpunkt entnommen wird; das Kalandrieren, bei welchem Folien oder Platten zwischen den Walzenpaaren eines Kalanders geformt werden, oder die verschiedenen Extrusionsverfahren, nach denen z.B. Schläuche, Profile, Rohre und ähnliche Artikel hergestellt werden.

Zahlreiche Kunststoffschmelzen zeigen ein großes Haftvermögen an den metallischen Teilen der Verarbeitungsmaschinen, woraus häufig Verarbeitungsprobleme entstehen können. Beim Spitzguß wird beispielsweise die Entnahme der Artikel aus der Form erschwert, wobei nicht nur die Gefahr ihrer Beschädigung besteht, sondern es auch zu Betriebsstörungen durch nicht entnehmbare Teile kommen kann. Bei der Folienherstellung führt ein Haften der Schmelze zu einer rauhen Oberfläche und zu Dickenschwankungen infolge von unkontrollierbaren Dehnungen beim Abzug von den Walzen.

Um diesen Problemen zu begegnen, werden bei der Verarbeitung Gleit- und Formtrennmittel zugesetzt, die einen trennwirksamen Film zwischen der Polymerschmelze und der Verarbeitungsmaschine aufbauen.

Für die große Gruppe der Vinylpolymeren und hierbei insbesondere für das Polyvinylchlorid werden zumindest bei hochwertigen Anwendungen zwei Gruppen von äußeren Gleitmitteln bevorzugt eingesetzt.

Bekannt ist ein Gleitmittel für die formgebende Verarbeitung thermoplastischer Massen, welches Mischester mit Hydroxyl- bzw. Säurezahlen von 0 bis 6 aus a) aliphatischen, cycloaliphatischen und/oder aromatischen Dicarbonsäuren, b) aliphatischen Polyolen und c) aliphatischen Monocarbonsäuren mit 12 bis 30 C-Atomen im Molekül enthält (vgl. DE 1 907 768). Die bevorzugten Ester basieren auf Fettsäuren mit nicht mehr als 22 C-Atomen.

Weitere bekannte Gleitmittel sind die verschiedenen halbsynthetischen Wachse auf Basis Montanwachs.

Obwohl die beiden genannten Gleitmitteltypen zu den wirksamsten aller Gleitmittel gehören, vereinigen sie jeweils für sich allein betrachtet nur einen Teil der Anforderungen, die an ein ideales Gleitmittel zu stellen sind. Die Montansäurederivate zeigen eine gute Trennwirkung und verleihen insbesondere bei der PVC-Verarbeitung der Schmelze eine hohe Festigkeit und dem Endprodukt eine sehr gute Wärmeformbeständigkeit. Nachteilig ist jedoch ihre Trübungsneigung, vor allem in nicht schlagzäh modifiziertem PVC, wodurch ihre Einsatzmenge gelegentlich auf Kosten einer ausreichenden Trennwirkung stark limitiert wird.

Zudem führt die Verwendung herkömmlicher Montansäureester bei der Herstellung von PVC-Kalanderfolien zu hohen Drücken im Walzenspalt der Verarbeitungsmaschine und damit zu einer hohen Belastung (Spaltlast). Sowohl einfache Fettsäureester, wie z.B. Stearylstearat, als auch die oben erwähnten oligomeren Fettsäureester vermindern die Spaltlast bei der PVC-Verarbeitung. Nachteilig ist jedoch, daß sie zugleich die Schmelzfestigkeit und die Wärmeformbeständigkeit des PVC herabsetzen. In nicht schlagzäh modifiziertem PVC zeigen sowohl einfache als auch oligomere Fettsäureester darüberhinaus ein günstigeres Transparenzverhalten als Montansäurederivate.

Bekannt ist die Anwendung eines Esters des Stearylalkohols mit einem Polyethylenoxidat, welches 71 % Dicarbonsäuren enthält, als Gleitmittel für die Verarbeitung von PVC (vgl. CA 1007398). Die Gleitwirkung des Produktes ist gut, das Produkt trübt jedoch sehr stark das PVC und ist daher als Gleitmittel für transparente PVC-Formmassen ungeeignet. Es wird in dieser Druckschrift zwar erwähnt, daß die Polyethylenoxidate auch mit Ethanol verestert werden können, es deutet nichts darauf hin, daß ein derartiger Ester ein brauchbares Gleitmittel für PVC abgeben könnte.

Weil die zur Zeit verfügbaren anderen Gleit- und Trennmittel die Anforderungen jeweils nur zum Teil erfüllen, wird in der Regel mit Gleitmittelmischungen gearbeitet. Diese Vorgehensweise führt jedoch dazu, daß die Rezepte recht kompliziert werden und nachteilige Wechselwirkungen zwischen den zahlreichen Bestandteilen auftreten können. Zudem erfordern mehr Rezeptbestandteile eine größere Lagerhaltung und aufwendigere Dosier- und Mischeinrichtungen bei der Verarbeitung.

Es bestand daher ein Bedarf an Gleitmitteln, welche die positiven Eigenschaften der Montansäurederivate und der oligomeren Fettsäureester in sich vereinen und dabei nicht die beschriebenen Nachteile dieser Gleitmittel zeigen.

Es wurde nun gefunden, daß bestimmte Ester, die aus oxidiertem Polyethylenwachsen und niederen Alkoholen entstehen, diese Anforderungen besonders gut erfüllen.

Die Erfindung betrifft somit einen Ester aus
a) einem oxidierten Polyethylenwachs mit einer Säurezahl von 10 bis 100 mg KOH/g und einer Verseifungszahl von 15 bis 150 mg KOH/g und
b) einem monofunktionellen C₁- bis C₃-Alkanol mit einer Säurezahl von 0 bis 40 mg KOH/g, einer Verseifungszahl von 15 bis 140 mg KOH/g und einer Schmelzviskosität bei 140 °C von 200 bis 2000 mPa·s

Die Erfindung betrifft jedoch auch eine thermoplastische Kunststoff-Formmasse, welche den vorgenannten Ester enthält.

Der erfindungsgemäße Ester entsteht durch Veresterung eines oxidierten Polyethylenwachses mit einem monofunktionellen C₁- C₃-Alkanol. Das oxidierte Polyethylenwachs hat eine Säurezahl von 10 bis 100, vorzugsweise 50 bis 70 mg KOH/g und eine Verseifungszahl von 15 bis 150, vorzugsweise 85 bis 120 mg KOH/g. Es kann beispielsweise durch Oxidation von Polyethylenwachsschmelzen mittels Luft gewonnen werden. Auch ist es möglich, ein durch Luftoxidation von kunststoffartigem verzweigten oder unverzweigten Polyethylen hergestelltes Wachs einzusetzen, wie es beispielsweise nach dem in der US-PS 3,756,999 beschriebenen Verfahren zugänglich ist.

Die Alkoholkomponente des erfindungsgemäßen Esters ist ein monofunktionelles C₁- bis C₃-Alkanol, beispielsweise Methanol, Ethanol, n- oder i-Propanol.

Die Herstellung des erfindungsgemäßen Esters erfolgt nach an sich bekannten Veresterungsverfahren. Liegt der Siedepunkt der eingesetzten Alkoholkomponente unter dem Schmelzpunkt des zu veresternden oxidierten Polyethylenwachses, so empfiehlt sich die Anwendung eines Lösungsverfahrens. So kann beispielsweise ein Gemisch aus oxidiertem Polyethylenwachs, überschüssigem Alkohol und einem geeigneten Lösemittel in Gegenwart eines Veresterungskatalysators solange erhitzt werden, bis der gewünschte Umsetzungsgrad erreicht ist. Vorteilhaft ist dabei die Verwendung eines wasserentziehenden Mittels, beispielsweise eines Molekularsiebes. Als Lösemittel werden bevorzugt unpolare Kohlenwasserstoffe wie beispielsweise Toluol, Xylol oder höhersiedende Benzine eingesetzt. Als Katalysator kommt ein für Veresterungen üblicherweise eingesetztes protonaktives Reagenz wie beispielsweise Schwefelsäure, p-Toluolsulfonsäure, Methansulfonsäure, sauer eingestellte lonentauscher etc. in Frage.

Soll mit einem Alkohol verestert werden, dessen Siedepunkt höher liegt als der Schmelzpunkt des Säurewachses, so kann zweckmäßig in der Weise verfahren werden, daß man die Schmelze des Wachses mit Alkohol und Katalysator versetzt und unter Abdestillieren des Reaktionswassers die Umsetzung bis zum gewünschten Veresterungsgrad führt.

Die Umsetzung wird so geführt, daß der fertige Ester eine Säurezahl von 0 bis 40, vorzugsweise 1 bis 20 mg KOH/g und eine Verseifungszahl von 15 bis 160, vorzugsweise 50 bis 130 mg KOH/g besitzt.

Der erfindungsgemäße Ester ist ein fester Stoff und besitzt eine Schmelzviskosität bei 140°C von 50 bis 2000, vorzugsweise 100 bis 800 mPa.s.

Der Ester wird als Gleitmittel in thermoplastischen Kunststoff-Formmassen eingesetzt, beispielsweise in Polyvinylchlorid, welches durch die bekannten Verfahren hergestellt werden kann (z.B. Suspensions-, Masse-, Emulsionspolymerisation), Mischpolymere des Vinylchlorids mit bis zu 30 Gew.-% an Comonomeren wie z.B. Vinylacetat, Vinylidenchlorid, Vinylether, Acrylnitril, Acrylsäureester, Maleinsäuremono- oder -diestern oder Olefinen, sowie Pfropfpolymerisaten des Polyvinylchlorids und Polyacrylnitril.

Bevorzugt sind Polyvinylchlorid, Polyvinylidenchlorid, Ethylen-Vinylacetat-Copolymere, Polyacrylnitril, Copolymere aus Vinylchlorid und Vinylacetat sowie daraus abgeleitete Pfropfpolymere oder Mischungen der vorgenannten Thermoplaste.

Die Zugabemenge beträgt 0,05 bis 5 Gew.-%, bezogen auf das Polymere. Basiert die Formmasse auf M- oder S-PVC, so beträgt die Zugabemenge vorzugsweise 0,05 bis 1 Gew.-%, basiert sie auf E-PVC, so ist die Menge vorzugsweise 1,0 bis 5, insbesondere 2 bis 4 Gew.-%, jeweils bezogen auf das Polymere.

Das Einmischen des erfindungsgemäßen Esters in die Polymeren geschieht auf die übliche Weise während der Herstellung der Formmassen.

Neben dem erfindungsgemäßen Ester kann die Kunststoff-Formmasse zusätzlich Füllstoffe, Wärmestabilisatoren, Lichtschutzmittel, Antistatika, Flammschutzmittel, Verstärkungsstoffe, Pigment- und/oder Farbstoffe, Verarbeitungshilfsmittel, zusätzlich Gleit- und Trennmittel, Schlagzähmacher, Antioxidantien, Treibmittel oder optische Aufheller in den üblichen Mengen enthalten.

Die nachfolgenden Beispiele sollen die Erfindung erläutern.

### Beispiel 1

### (Veresterungsverfahren I)

In einem 2 I-Dreihalskolben wurden 500 g eines oxidierten Polyethylenwachses (Säurezahl 65 mg KOH/g, Schmelzviskosität 250 mPa·s/120°C, Tropfpunkt 110°C) sowie 500 cm³ Toluol, 500 cm³ Methanol und 5,0 g p-Toluolsulfonsäure vorgelegt und auf Siedetemperatur erhitzt. Der Kolben war mit einer Destillationsbrücke versehen. Das kondensierende Alkohol/Lösemittel/Wasser-Gemisch wurde zur Entwässerung über ein 4 A-Molekularsieb geführt und gelangte wieder in den Dreihalskolben zurück.

Nach 7 h Reaktionszeit wurde die Lösung mit 2,5 g Natriumhydrogencarbonat versetzt. Lösemittel und überschüssiger Alkohol wurden abdestilliert, die verbleibende Wachsschmelze wurde über ein beheizbares Filter druckfiltriert.

### Vergleich A

### (Veresterungsverfahren II)

500 g des in Beispiel 1 verwendeten oxidierten Polyethylenwachses wurden in einem mit Destillationsbrücke und Rührer ausgestatteten Dreihalskolben auf 130°C erhitzt. Zu der Wachsschmelze wurden 200 g n-Butanol sowie 0,5 cm³ halbkonzentrierte Schwefelsäure gegeben. Unter langsamem Abdestillieren von Wasser und gegebenenfalls von überschüssigem Alkohol wurde die Veresterung eine Stunde bei ca. 115°C durchgeführt. Anschließend wurde der Katalysator mit wäßriger Natronlauge neutralisiert und gegebenenfalls restlicher Alkoholüberschuß unter Anlegen von Vakuum abdestilliert. Die Wachsschmelze wurde druckfiltriert.

Die in den folgenden Beispielen verwendeten Esterwachse wurden aus dem im Beispiel 1 beschriebenen Polyethylenoxidat (SZ 65 mg KOH/g) hergestellt und besitzen die in der Tabelle angegebene Zusammensetzung und Kennzahlen. Die Esterwachse I und II sind erfindungsgemäß, die übrigen Produkte dienen als Vergleich.

| Wachs | Alkoholkomponente | SZ mg KOH/g | VZ mg KOH/g | °C | Veresterungsverfahren |
|---|---|---|---|---|---|
| I | MeOH | 5 | 95 | 108°C | I |
| II | EtOH | 4 | 94 | 106°C | I |
| Vergleich A | n-Butanol | 7 | 91 | 105°C | II |
| Vergleich B | n-Octanol | 7 | 89 | 101°C | II |
| Vergleich C | Talgfettalkohol | 5 | 79 | 102°C | II |
| Vergleich D | Ethandiol | 20 | 97 | 109°C | II |
| Vergleich E | Butan-1.3-diol | 20 | 95 | 107°C | II |

### Beispiel 2

Eine PVC-Mischung aus
- 100,0 Teilen: S-PVC (K-Wert ca. 60)
- 1,0 Teilen: Verarbeitungshilfsmittel (Copolymer aus Ethylacrylat und Methylmethacrylat MG ca. 600.000)
- 1,5 Teilen: Di-n-octylzinnmercaptid
- 0,3 Teilen: Glycerinmonooleat
- 0,6 Teilen: Prüfprodukt
wurde auf einem Walzwerk bei 190 °C und 15/20 Upm im Verlauf von 5 Minuten plastiziert. Danach wurden aus der Formmasse 2 mm dicke Plättchen gepreßt, die in neutralgrauem Licht mit einem Meßgerät der Fa. Lange auf ihre Transparenz geprüft wurden.

| Wachs | Transparenz in % |
|---|---|
| I | 80,6 |
| II | 78,6 |
| Vergleich A | 79,8 |
| Vergleich B | 72,8 |
| Vergleich C | 69,1 |
| Vergleich D | 59,0 |
| Vergleich E | 76,7 |

### Beispiel 3

Eine PVC-Mischung aus
- 100,0 Teilen: M-PVC (K-Wert ca. 57)
- 8,0 Teilen: MBS-Schlagzähmacher
- 1,2 Teilen: Verarbeitungshilfsmittel (Copolymer aus Ethylacrylat und Methylmethacrylat MG ca. 3.000.000)
- 1,6 Teilen: Di-n-octylzinnmercaptid
- 1,0 Teilen: epoxidiertes Sojabohnenöl
- 0,3 Teilen: Glycerinmonooleat und
- 0,6 Teilen: Prüfprodukt
wurde auf einem Zweiwalzwerk bei 190°C und 15/20 Upm gewalzt, wobei das gebildete Walzfell im Abstand von etwa 3 Minuten manuell gewendet wurde. Bestimmt wurde die Zeit bis zum Kleben des Fels sowie die Zeit zur Zersetzung (starke Braunfärbung).

| Wachs | klebfreie Zeit (min) | Zersetzung (min) |
|---|---|---|
| I | 28 | 34 |
| II | 23 | 30 |
| Vergleich A | 25 | 30 |
| Vergleich B | 31 | 35 |
| Vergleich C | 26 | 30 |
| Vergleich D | 12 | 35 |
| Vergleich E | 13 | 35 |

## Patentansprüche (Patentansprüche für folgende(n) Vertragsstaat(en): AT, BE, CH, LI, DE, FR, GB, IT, NL, SE)

1. Ester aus
a) einem oxidierten Polyethylenwachs mit einer Säurezahl von 10 bis 100 mg KOH/g und einer Verseifungszahl von 15 bis 150 mg KOH/g und
b) einem monofunktionellen C₁- C₃-Alkanol, wobei der Ester eine Säurezahl von 0 bis 40 mg KOH/g, eine Verseifungszahl von 15 bis 160 mg KOH/g und eine Schmelzviskosität bei 140 °C von 50 bis 2000 mPa·s aufweist.

2. Ester nach Anspruch 1, dadurch gekennzeichnet, daß das oxidierte Polyethylenwachs eine Säurezahl von 50 bis 70 mg KOH/g und eine Verseifungszahl von 85 bis 120 mg KOH/g besitzt.

3. Verwendung des Esters nach Anspruch 1 als Gleitmittel für die Verarbeitung thermoplastischer Kunststoff-Formmassen.

4. Thermoplastische Kunststoff-Formmasse, dadurch gekennzeichnet, daß sie 0,05 bis 5 % eines Esters nach Anspruch 1 enthält.

5. Thermoplastische Kunststoff-Formmasse nach Anspruch 4, dadurch gekennzeichnet, daß sie auf Polyvinylchlorid, Polyvinylidenchlorid, Ethylen-Vinylacetat-Copolymeren, Polyacrylnitril, Pfropf- oder Copolymeren des Vinylchlorids und Vinylacetat oder Mischungen der angegebenen Thermoplasten basiert.

6. Thermoplastische Kunststoff-Formmasse nach Anspruch 5, dadurch gekennzeichnet, daß sie zusätzlich Füllstoffe, Wärmestabilisatoren, Lichtschutzmittel, Antistatika, Flammschutzmittel, Verstärkungsstoffe, Pigment- und/oder Farbstoffe, Verarbeitungshilfsmittel, weitere Gleit- und Trennmittel, Schlagzähmacher, Antioxidantien, Treibmittel oder optische Aufheller enthält.

## Patentansprüche (Patentansprüche für folgende(n) Vertragsstaat(en): ES)

1. Thermoplastische Kunststoff-Formmasse, dadurch gekennzeichnet, daß sie 0,05 bis 5 % eines Esters aus
a) einem oxidierten Polyethylenwachs mit einer Säurezahl von 10 bis 100 mg KOH/g und einer Verseifungszahl von 15 bis 150 mg KOH/g und
b) einem monofunktionellen C₁- C₃-Alkanol, wobei der Ester eine Säurezahl von 0 bis 40 mg KOH/g, eine Verseifungszahl von 15 bis 160 mg KOH/g und eine Schmelzviskosität bei 140 °C von 50 bis 2000 mPa·s aufweist, enthält.

2. Formmasse nach Anspruch 1, dadurch gekennzeichnet, daß das oxidierte Polyethylenwachs eine Säurezahl von 50 bis 70 mg KOH/g und eine Verseifungszahl von 85 bis 120 mg KOH/g besitzt.

3. Formmasse nach Anspruch 1, dadurch gekennzeichnet, daß sie auf Polyvinylchlorid, Polyvinylidenchlorid, Ethylen-Vinylacetat-Copolymeren, Polyacrylnitril, Pfropf- oder Copolymeren des Vinylchlorids und Vinylacetat oder Mischungen der angegebenen Thermoplasten basiert.

4. Formmasse nach Anspruch 3, dadurch gekennzeichnet, daß sie zusätzlich Füllstoffe, Wärmestabilisatoren, Lichtschutzmittel, Antistatika, Flammschutzmittel, Verstärkungsstoffe, Pigment- und/oder Farbstoffe, Verarbeitungshilfsmittel, weitere Gleit- und Trennmittel, Schlagzähmacher, Antioxidantien, Treibmittel oder optische Aufheller enthält.

## Claims (Claims for the following Contracting State(s): AT, BE, CH, LI, DE, FR, GB, IT, NL, SE)

1. An ester obtained from
a) an oxidized polyethylene wax having an acid number of 10 to 100 mg KOH/g and a saponification number of 15 to 150 mg KOH/g and
b) a monofunctional C₁- C₃-alkanol, the ester having an acid number of 0 to 40 mg KOH/g, a saponification number of 15 to 160 mg KOH/g and a melt viscosity at 140°C of 50 to 2000 mPa.s.

2. An ester as claimed in claim 1, wherein the oxidized polyethylene wax has an acid number of 50 to 70 mg KOH/g and a saponification number of 85 to 120 mg KOH/g.

3. The use of the ester as claimed in claim 1 as a lubricant for processing thermoplastic molding compositions.

4. A thermoplastic molding composition, which contains 0.05 to 5% of an ester as claimed in claim 1.

5. The thermoplastic molding composition as claimed in claim 4, which is based on polyvinyl chloride, polyvinylidene chloride, ethylene/vinyl acetate copolymers, polyacrylonitrile, graft polymers or copolymers of vinyl chloride and vinyl acetate or mixtures of the indicated thermoplastics.

6. The thermoplastic molding composition as claimed in claim 5, which additionally contains fillers, heat stabilizers, light stabilizers, antistatic agents, flameproofing agents, reinforcing substances, pigments and/or dyes, processing auxiliaries, further lubricants and release agents, impact strength modifiers, antioxidants, blowing agents or fluorescent brighteners.

## Claims (Claims for the following Contracting State(s): ES)

1. A thermoplastic molding composition, which contains 0.05 to 5% of an ester obtained from
a) an oxidized polyethylene wax having an acid number of 10 to 100 mg KOH/g and a saponification number of 15 to 150 mg KOH/g and
b) a monofunctional C₁- C₃-alkanol, the ester having an acid number of 0 to 40 mg KOH/g, a saponification number of 15 to 160 mg KOH/g and a melt viscosity at 140°C of 50 to 2000 mPa.s.

2. The molding composition as claimed in claim 1, wherein the oxidized polyethylene wax has an acid number of 50 to 70 mg KOH/g and a saponification number of 85 to 120 mg KOH/g.

3. The molding composition as claimed in claim 1, which is based on polyvinyl chloride, polyvinylidene chloride, ethylene/vinyl acetate copolymers, polyacrylonitrile, graft polymers or copolymers of vinyl chloride and vinyl acetate or mixtures of the indicated thermoplastics.

4. The molding composition as claimed in claim 3, which additionally contains fillers, heat stabilizers, light stabilizers, antistatic agents, flameproofing agents, reinforcing substances, pigments and/or dyes, processing auxiliaries, further lubricants and release agents, impact strength modifiers, anti-oxidants, blowing agents or fluorescent brighteners.

## Revendications (Revendications pour l'(les) Etat(s) contractant(s) suivant(s): AT, BE, CH, LI, DE, FR, GB, IT, NL, SE)

1. Ester formé de
a) une cire de polyéthylène oxydée ayant un indice d'acide compris entre 10 et 100 mg KOH/g et un indice de saponification compris entre 15 et 150 mg KOH/g et
b) un alcanol en C₁-C₃ monofonctionnel, l'ester présentant un indice d'acide compris entre 0 et 40 mg KOH/g, un indice de saponification compris entre 15 et 160 mg KOH/g et une viscosité à l'état fondu à 140°C comprise entre 50 et 2 000 mPa·s.

2. Ester selon la revendication 1, caractérisé en ce que la cire de polyéthylène oxydée possède un indice d'acide compris entre 50 et 70 mg KOH/g et un indice de saponification compris entre 85 et 120 mg KOH/g.

3. Utilisation de l'ester selon la revendication 1 en tant qu'agent de démoulage pour le façonnage de matières moulables en matière plastique thermoplastique.

4. Matière moulable en matière plastique thermoplastique, caractérisé en ce qu'elles contiennent de 0,05 à 5 % d'un ester selon la revendication 1.

5. Matière moulable en matière plastique thermoplastique selon la revendication 4, caractérisée en ce qu'elle est à base de chlorure de polyvinyle, de chlorure de polyvinylidène, de copolymères éthylène-acétate de vinyle, de polyacrylonitrile, de polymères greffés ou de copolymères de chlorure de vinyle et d'acétate de vinyle ou de mélanges des matières thermoplastiques indiquées.

6. Matière moulable en matière plastique thermoplatique selon la revendication 5, caractérisée en ce qu'elle contient en plus des charges, des stabilisants à la chaleur, des agents photoprotecteurs, des agents antistatiques, des agents ignifugeants, des charges de renfort, des pigments et/ou des colorants, des agents auxiliaires de façonnage, des agents supplémentaires lubrifiants ou de démoulage, des agents de résilience, des anti-oxydants, des agents gonflants ou des agents d'azurage optique.

## Revendications (Revendications pour l'(les) Etat(s) contractant(s) suivant(s): ES)

1. Matière moulable en matière plastique thermoplastique, caractérisée en ce qu'elle contient de 0,05 à 5 % d'un ester formé de
a) une cire de polyéthylène oxydée ayant un indice d'acide compris entre 10 et 100 mg KOH/g et un indice de saponification compris entre 15 et 150 mg KOH/g et
b) un alcanol en C₁-C₃ monofonctionnel, l'ester présentant un indice d'acide compris entre 0 et 40 mg KOH/g, un indice de saponification compris entre 15 et 160 mg KOH/g et une viscosité à l'état fondu à 140°C comprise entre 50 et 2000 mPa.s.

2. Matière moulable selon la revendication 1, caractérisée en ce que la cire de polyéthylène oxydée possède un indice d'acide compris entre 50 et 70 mg KOH/g et un indice de saponification compris entre 85 et 120 mg KOH/g.

3. Matière moulable selon la revendication 1, caractérisée en ce qu'elle est à base de chlorure de polyvinyle, de chlorure de polyvinylidène, de copolymères éthylène-acétate de vinyle, de polyacrylonitrile, de polymères greffés ou de copolymères de chlorure de vinyle et d'acétate de vinyle ou de mélanges des matières thermoplastiques indiquées.

4. Matière moulable selon la revendication 3, caractérisée en ce qu'elle contient en plus des charges, des stabilisants à la chaleur, des agents photoprotecteurs, des agents antistatiques, des agents ignifugeants, des charges de renfort, des pigments et/ou des colorants, des agents auxiliaires de façonnage, des agents supplémentaires lubrifiants ou de démoulage, des agents de résilience, des anti-oxydants, des agents gonflants ou des agents d'azurage optique.
